# EUROPÄISCHE PATENTSCHRIFT

(11) **EP 0 512 314 B1**
(45) Veröffentlichungstag und Bekanntmachung des Hinweises auf die Patenterteilung: **30.08.1995**
(21) Anmeldenummer: 92106808.6
(22) Anmeldetag: 21.04.1992
(51) Int. Cl.: B23H 7/20, G05B 19/409

(54) **Verfahren zum funkenerosiven Schneiden und Drahterosionsmaschine zur Durchführung des Verfahrens**
Method of electric discharge cutting and wire cutting machine for carrying out the invention
Procédé de découpage par électroérosion et machine à découper par fil pour sa mise en oeuvre

(30) Priorität: 03.05.1991 DE 4114510
(43) Veröffentlichungstag der Anmeldung: 11.11.1992
(73) Patentinhaber: AG für industrielle Elektronik AGIE Losone bei Locarno, CH-6616 Losone/Locarno (CH)
(72) Erfinder: Borsari, Claudio, CH-6711 Leontica (CH)
(74) Vertreter: Turi, Michael, Dipl.-Phys.

(56) Entgegenhaltungen:
- EP-A- 0 059 639
- DE-A- 3 902 173
- FR-A- 2 650 972

## Beschreibung

Die Erfindung betrifft ein verfahren zum funkenerosiven Schneiden wenigstens eines Formstückes in wenigstens einem Werkstück, wobei das wenigstens eine Formstück durch einen Vollschnitt längs einer vollschnittbahn und durch einen Trennschnitt längs einer Trennschnittbahn bearbeitet wird. Zusätzlich betrifft die Erfindung eine Drahterosionsmaschine zum funkenerosiven Schneiden wenigstens eines Formstücks in wenigstens einem Werkstück, mit einer Steuerung, durch die die Abfolge von Vollschnitten längs einer Vollschnittbahn und von Trennschnitten längs einer Trennschnittbahn vorgegeben ist.

Beim funkenerosiven Schneiden von Werkstücken ist es oberstes Ziel, den bzw. die Schneidvorgänge soweit wie möglich zu automatisieren. Der manuelle Eingriff eines Operateurs und insbesondere dabei das Erfordernis seiner Anwesenheit zu Kontrollzwecken soll weitestgehend vermieden werden. Bei herkömmlichen Drahterosionsmaschinen hat dies dazu geführt, daß die erforderlichen Schnitte nach Einprogrammierung im wesentlichen vollautomatisch, ohne Anwesenheit des Operateurs durchgeführt werden können. Im folgenden sollen die vier gängigst verwendeten Schnittarten bei der funkenerosiven Bearbeitung mit Hilfe eines Drahtes, erläutert werden:

Zum Schneiden einer Matrize in ein Werkstück wird üblicherweise im Werkstück zunächst eine Startlochbohrung vorgesehen. Um diese Startlochbohrung herum wird eine Form in das zu bearbeitende Werkstück geschnitten. Hierzu wird zunächst ein Vollschnitt durchgeführt, d. h. ein erster Schnitt in das Werkstück. Um die Oberflächentoleranzen der zu erzeugenden Matrize zu verbessern, werden längs der Bahn des Vollschnittes Nachschnitte vorgenommen. Diese Nachschnitte gehen selbstverständlich wesentlich schneller vonstatten als die Vollschnitte, da unvergleichbar weniger Material aberodiert werden muß.

Damit das um die Startlochbohrung herum erodierte Formstück nicht einfach aus dem Werkstück herausfällt und Teile der Drahterosionsmaschine beschädigt, wird eine kurze Bahn, die sogenannte Trennschnittbahn nach dem Vollschnitt zunächst unerodiert belassen. Diese Trennschnittbahn ist die letzte Verbindung zwischen dem Werkstück und dem herauserodierten Formstück. Bei Anwesenheit eines Operateurs wird schließlich der Trennschnitt längs der Trennschnittbahn vorgenommen. Das beim Erodieren des Werkstückes entstandene Ausfallstück kann so kontrolliert vom Operateur entnommen werden. Abschließend folgen dem Trennschnitt schließlich Nachschnitte längs der Trennschnittbahn zur Veredelung der Oberflächenqualität der Matrize.

Bei einem Stempel werden im wesentlichen die gleichen Formstücke erzeugt wie bei einer Matrize. Im Unterschied zur Herstellung einer Matrize befindet sich jedoch der Ausgangspunkt für das Schneiden, d. h. die Startlochbohrung außerhalb des Stempels, d. h. im nach dem Schnitt noch verbleibenden Werkstück. Dies ist auch nicht weiter verwunderlich, da es bei der Erzeugung eines Stempels auf das Werkstück nicht mehr ankommt. Es kann also durch das Startloch gewissermaßen zerstört sein.

Die zuvor im Rahmen der Matrize besprochene Schnittfolge bleibt bei der Erzeugung eines Stempels im wesentlichen gleich. Sobald aber der Vollschnitt und sämtliche Nachschnitte längs der Vollschnittbahn bei der Erzeugung des Stempels beendet sind, muß der Operateur den Stempel im Werkstück derart sichern, daß er im Werkstück verbleibt. Hierzu kann er sich unterschiedlichster Vorrichtungen, wie beispielsweise Magneten, klebender Teile oder auch Klemmen zwischen Werkstück und Formstück in bekannter Weise bedienen.

Ist das aus dem Werkstück nahezu vollständig herauserodierte Formstück - also der Stempel - nach dem Vollschnitt fixiert, kann der noch verbleibende Trennschnitt und die darauf folgenden Nachschnitte längs der Trennschnittbahn vorgenommen werden.

Unterschiede bei der Herstellung von Matrizen und Stempeln ergeben sich dadurch, daß im Fall der Matrize auf die Innenfläche des beschnittenen Werkstückes, im Falle des Stempels hingegen auf die Außenfläche des Formstückes Wert gelegt wird. In beiden Fällen ist aber die Anwesenheit des Operateurs bei der Sicherung oder Entnahme des Formstückes kurz vor bzw. während der Durchführung des jeweiligen Trennschnittes erforderlich.

Der Vollständigkeit halber seien noch die beiden anderen, üblichen Schnittarten erwähnt: Dabei handelt es sich einerseits um den Vollabtragschnitt, bei dem innerhalb einer Kontur das Material wegerodiert wird ohne daß Formstücke entstehen. Andererseits um die sogenannte offene Kontur, d. h. die Bearbeitung der Außenseite eines Werkstückes. Bei dieser Schnittart wird im wesentlichen genauso vorgegangen wie bei der Weiterbearbeitung des zuvor erwähnten Stempels.

Bislang war die zuvor erläuterte Anwesenheit des Operateurs immer nach einer ganz bestimmten Abfolge von Schnitten notwendig. Waren daher bestimmte Schnitte vollendet, der Operateur demzufolge erforderlich aber nicht anwesend, so führte dies zu einer unwirtschaftlichen Unterbrechung des gesamten Bearbeitungsvorganges. Bei der Bearbeitung mehrerer Werkstücke oder bei der Erzeugung mehrerer Formstücke in einem Werkstück ist dieser Zustand besonders nachteilig. Gleichzeitig war bislang der Operateur von der Drahterosionsmaschine insofern abhängig, als er bei bestmöglicher Arbeitsorganisation dennoch zu einem ganz bestimmten Zeitpunkt - nämlich dem Zeitpunkt der Trennschnitte - anwesend sein mußte.

Aus der EP-A-059 639 ist ein gattungsgemäßes Verfahren bekannt, anhand dessen insbesondere wenigstens eine Patrize in ein Werkstück funkenerosiv geschnitten wird. Darauf basierend, daß der erzeugte Schnitt ins Werkstück in eine Vollschnitt- und eine Trennschnittbahn aufgeteilt wird, wird eine Änderung der Bewegungsrichtung für die Trennschnittbahn gegenüber der Bewegungsrichtung für die Vollschnittbahn vorgeschlagen. Ebenso ist aus der DE 39 02 173 A1 die Unterteilung eines Gesamtschnittes in einem Werkstück in einen Vollschnitt und einen Restschnitt bekannt. Um zu vermeiden, daß für Vollschnitt und Restschnitt zwei NC-Programme verwendet werden müssen, soll hier lediglich ein NC-Programm verwendet werden.

Schließlich ist noch aus der FR-A 2650972 ein numerisches Steuergerät bekannt, das unter Berücksichtigung der Schnittkontur einen Grobbearbeitungsschnitt und einen Feinbearbeitungsschnitt initiiert. Ziel der Erfindung ist es, diese Nachteile bekannter Verfahren und Drahterosionsmaschinen zu beseitigen.

Dieses Ziel wird bei einem bekannten verfahren dadurch erreicht, daß längs der Vollschnittbahn und der Trennschnittbahn Nachschnitte vorgenommen werden und der zeitliche Ablauf der Schnitte in Abhängigkeit der Arbeitsbedingungen, wobei eine Arbeitsbedingung die Anwesenheit des Operateurs ist, zu Beginn der Schneidoperation festgelegt wird und die Vollschnitte, Trennschnitte und jeweiligen Nachschnitte dementsprechend durchgeführt werden. So ist der zeitliche Ablauf der Schnitte nicht nur davon abhängig, wann der Operateur anwesend ist. Es ist auch die Berücksichtigung weiterer, die Schnitte beeinflussender Umstände möglich. Beispielsweise kann berücksichtigt werden, energieaufwendigere vollschnitte zu einem Zeitpunkt durchzuführen, zu dem die Kosten für die erforderliche Energie geringer als üblich sind. Auch können Nachschnitte, die eine bestimmte Präzision erfordern, zu Zeitpunkten durchgeführt werden, zu denen gewisse äußere Einflüsse wie beispielsweise Erschütterungen - beispielsweise durch an- und abfliegende Flugzeuge - nicht vorliegen.

Ist die Arbeitsbedingung die Anwesenheit des Operateurs, so wird der Trennschnitt bei Eintreten dieser Arbeitsbedingung durchgeführt. Auf diese Weise ist es für den Operateur möglich, sich den Zeitpunkt für den eigentlichen Eingriff in das meist langwierige Arbeitsverfahren selbst auszuwählen. Er kann den Zeitpunkt für den Eingriff den äußeren Umständen, wie beispielsweise Tag, Nacht und Feiertag entsprechend anpassen. Vorteilhaft werden zum Schneiden mehrerer Formstücke durch wenigstens einen Vollschnitt, einen Trennschnitt sowie wenigstens jeweils einen Nachschnitt die Trennschnitte unmittelbar nacheinander ausgeführt (Anspruch 2). Der Schneidvorgang wird somit ergonomisch verbessert. Die einzigen, die Anwesenheit des Operateurs erforderlich machenden Verfahrensschritte werden dadurch zeitlich konzentriert. Durch Ausnutzung des kürzestmöglichsten Zeitraums für die Anwesenheit des Operateurs wird dessen Verwendbarkeit optimiert. Er steht nach kurzer Zeit des Eingriffes wieder für andere Tätigkeiten zur Verfügung.

Bei einem bevorzugten Verfahren wird zunächst deren Vollschnitt, dann deren Trennschnitt und daraufhin deren sämtliche Nachschnitte durchgeführt (Anspruch 3). Hierdurch wird der Zeitpunkt für den Eingriff durch den Operateur frühestmöglich gelegt. Bei einem anderen bevorzugten erfindungsgemäßen Verfahren werden zunächst deren Vollschnitt, dann ein Nachschnitt längs der Vollschnittbahn, dann deren Trennschnitt, danach ein Nachschnitt längs der Trennschnittbahn und darauffolgend weitere Nachschnitte längs der aus Vollschnitt- und Trennschnittbahn zusammengesetzten Gesamtbahn durchgeführt (Anspruch 4). In diesem Falle sind die Verfahrensschritte bei der gesamten Bearbeitung von Werkstücken um den Zeitpunkt des Eingriffes durch den Operateur gleichmäßig verteilt.

Bei einer weiteren vorteilhaften Ausgestaltung des erfindungsgemäßen Verfahrens wird zunächst deren Vollschnitt, dann sämtliche Nachschnitte längs der Vollschnittbahn dann deren Trennschnitt und darauffolgend sämtliche Nachschnitte längs der Trennschnittbahn durchgeführt (Anspruch 5). Dabei ist der Trennschnitt zum spätestmöglichen Zeitpunkt gelegt.

Bei einer anderen vorteilhaften Ausgestaltung des erfindungsgemäßen Verfahrens wird außer den Matrizen wenigstens ein Stempel geschnitten (Anspruch 6). Aus ergonomischen Gründen kann so die Erzeugung unterschiedlicher Formstücke miteinander verbunden werden. Um vorteilhaft die Schnitte von Matrize (n) und Stempel aufeinander abzustimmen, insbesondere in Bezug auf den Eingriff des Operateurs werden vor den Trennschnitt der Matrize (n) ein Vollschnitt und danach sämtliche Nachschnitt des Stempels längs dessen Vollschnittbahn durchgeführt (Anspruch 7). Hierzu dient besonders bevorzugt, daß nach dem Trennschnitt der Matrize (n) der Trennschnitt des Stempels und sämtliche Nachschnitte längs dessen Trennschnittbahn durchgeführt werden (Anspruch 8). Bei einer derartigen Abfolge von Schnitten bei kombinierten Matrizen- und Stempelschnitten kann die Ausfallstücksicherung bei der Matrize und die Fixierung am Werktück unmittelbar aufeinander folgen. Eine Reduzierung des Eingriffszeitraums ist die Folge.

Bei einer weiteren vorteilhaften Ausgestaltung des erfindungsgemäßen Verfahrens wird vor und/oder nach den Matrizen- und/oder Stempelschnitten ein Vollabtragschnitt durchgeführt (Anspruch 9). Derartige Vollabtragschnitte sind äußerst zeitaufwendig und können so beliebig mit zeitlich geringer aufwendigen Schnitten verbunden werden.

Das zuvor erwähnte Ziel der Erfindung kann bei einer gattungsgemäßen Drahterosionsmaschine entsprechend Patentanspruch 10 dadurch erreicht werden, daß durch die Steuerung Nachschnitte längs der Voll- und Trennschnittbahnen vorgebbar sind und die Steuerung derart ausgelegt ist, daß der Zeitraum vom Beginn der Schnitte bis zum ersten Trennschnitt berechnet und die günstigste Sequenz an Schnitten automatisch ausgewählt wird. Hierdurch kann den Umgebungsbedingungen der Drahterosionsmaschine am besten Rechnung getragen werden. Die Maschine kann individuell von Fall zu Fall neu eingestellt werden.

Vorteilhaft weist die Drahterosionsmaschine Mittel zur Anzeige des Zeitraums von Beginn der Schnitte bis zum ersten Trennschnitt auf (Anspruch 11). Hierdurch kann der Operateur kontrollieren, in welchem Verfahrensstadium er sich befindet. Er kann seine Vorbereitungen bei der Überwachung der Trennschnitte langfristig vorsehen und planen. Ein überstürzter Eingriff und damit verbundene Ausfallzeiten im Verfahrensablauf werden vermieden.

Ausführungsbeispiele der Erfindung sind in den Zeichnungen dargestellt und werden im folgenden näher beschrieben.

Es zeigen:
- Fig.1: Ein Flußdiagramm für einen zu einem frühen Zeitpunkt gelegten Matrizentrennschnitt;
- Fig.2: ein Flußdiagramm für einen zu einen späten Zeitpunkt gelegten Matrizentrennschnitt;
- Fig.3a-d: die Schnittfolge bei mehreren Schnittarten und mehreren Werkstücken bei frühzeitigem Trennschnitt und
- Fig.4a-d: die Schnittfolge bei mehreren Schnittarten und mehreren Werkstücken bei spätem Trennschnitt;
Es folgt die Erläuterung der Erfindung anhand der Zeichnungen nach Aufbau und ggf. auch nach Wirkungsweise der dargestellten Erfindung.

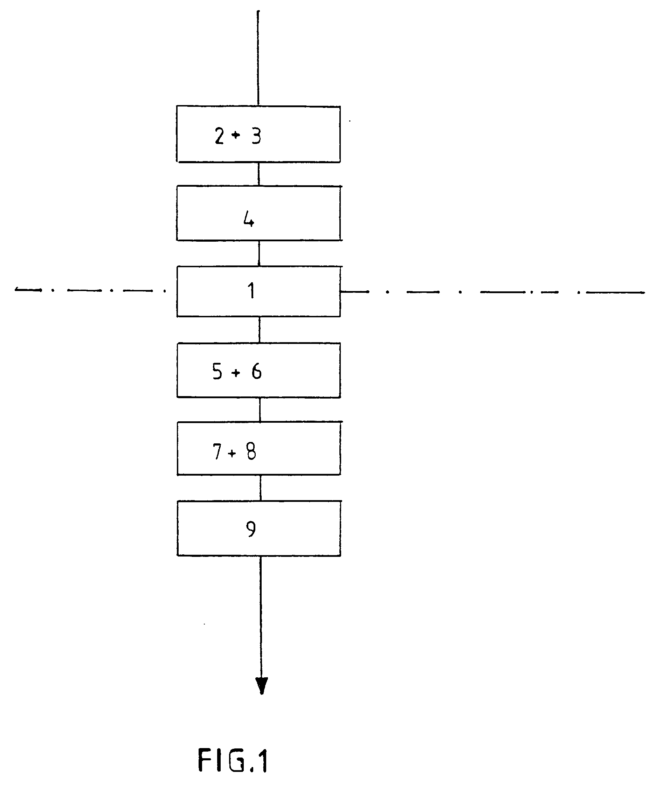

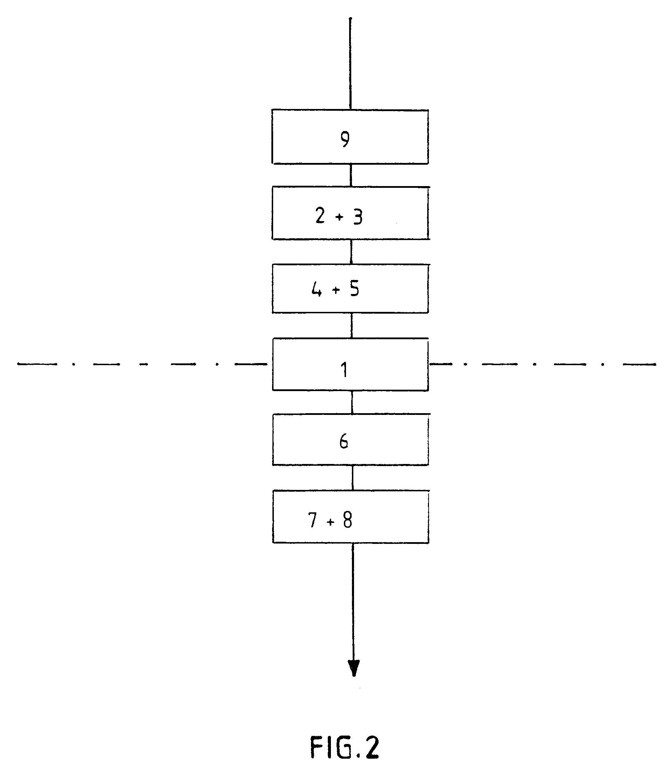

Aus den Flußdiagrammen der Fig. 1 und 2 wird ersichtlich, wie Matrizentrennschnitte 1 in der zeitlichen Schnittfolge gelegt werden können um den Eingriff des Operateurs in das Schneidverfahren früher oder später erforderlich zu machen.

Im Ausführungsbeispiel der Fig. 1 greift der Operateur frühzeitig ein. Er beginnt in seiner Arbeitsorganisation der Schnitte zunächst mit Stempelvollschnitten 2 sowie Stempelnachschnitten 3 längs der Vollschnittbahn. Diesen Schnitten folgen Matrizenvollschnitte 4. Sind diese Schnitte beendet, so verbleibt längs der zu schneidenden Matrizenbahn lediglich noch eine kleine Schnittbahn, nämlich die Schnittbahn für den Matrizentrennschnitt 1. Wie schon erläutert muß bei diesen Trennschnitt der Operateur anwesend sein um die Bewegung des anfallenden Ausfallstückes im Werkstück zu kontrollieren.

Auch die Bahn für den Stempelschnitt ist nach den zuvor erwähnten Stempelschnitten 2, 3 nur noch in einem kurzen Bereich nicht durchtrennt. Da durch Klammern oder ähnliche Fixiereinrichtungen der Stempel an dem Werkstück zwecks Weiterbearbeitung in einer bestimmten Stellung angeordnet ist und die hierfür verwendete Fixiereinrichtung zumeist die Vollschnittbahn übergreift, ist keine Schneidbewegung der Drahtelektrode längs der Vollschnittbahn mehr möglich.

Sind die zuvor beschriebenen Vorbereitungen getroffen, so erfolgt der Matrizentrennschnitt 1, dem unmittelbar Matrizennachschnitte 5 längs der Vollschnittbahn sowie Matrizennachschnitte 6 längs der Trennschnittbahn folgen. Diesen Schnitten folgen die Stempeltrennschnitte 7 sowie Stempelnachschnitte 8 längs der Trennschnittbahn. Schließlich kann die Schnittfolge durch einen Vollabtrag 9 ergänzt werden.

Im Flußdiagramm der Fig. 2 ist ein später Trennschnitt und dementsprechend späterer Eingriff des Operateurs dargestellt als in Fig. 1. Die Schneidfolge beginnt in diesem Ausführungsbeispiel mit dem Vollabtrag 9, dem die üblichen Stempelvollschnitte 2 und Stempelnachschnitte 3 längs der Vollschnittbahn folgen.

Daraufhin werden die Matrizenvollschnitte 4 durchgeführt. Im Unterschied jedoch zu dem in Fig. 1 dargestellten Ausführungsbeispiel folgen dem Matrizenvollschnitt 4 unmittelbar die Matrizennachschnitte 5 längs der Vollschnittbahn. Die Matrize ist also bei der Schnittorganisation mit spätem Trennschnitt gegenüber der mit frühem Trennschnitt insofern unterschiedlich vorbereitet, als alle Schnitte längs der Vollschnittbahn vor dem Matrizentrennschnitt 1 durchgeführt sind.

Nun erfolgt der Matrizentrennschnitt 1. Diesem folgen die Matrizennachschnitte 6 längs der Trennschnittbahn. Wie auch schon in dem in Fig. 1 dargestellten Ausführungsbeispiel, folgen nun auch im Ausführungsbeispiel der Fig. 2 die Stempeltrennschnitte 7 und die Stempelnachschnitte 8 längs der Trennschnittbahn.

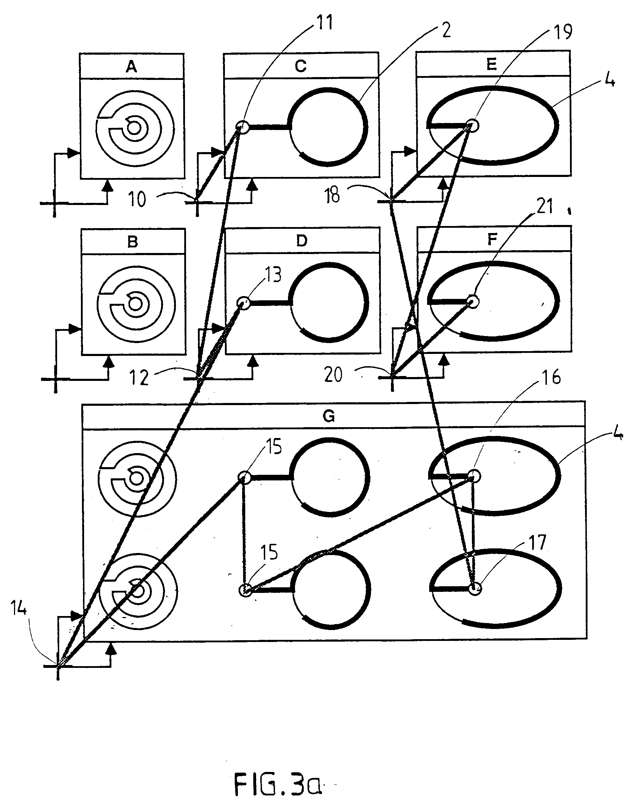

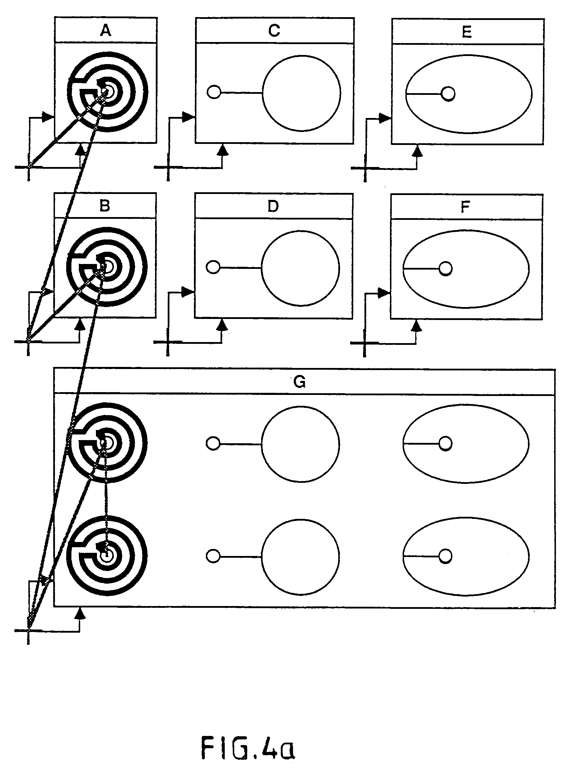

In den Ausführungsbeispielen der Figuren 3a bis 3d und 4a bis 4d sind die in den Figuren 1 und 2 dargestellten Schnittfolgen für mehrere Werkstücke anhand ihrer Schnittkonturen noch einmal verdeutlicht. Von einem Startpunkt 10 ausgehend wird die Elektrode zunächst zu einem Startloch 11 in einem Werkstück C bewegt. Von dort aus wird die Elektrode zur Schnittbahn für den Stempel bewegt. Es erfolgt ein Stempelvollschnitt 2 sowie die Stempelnachschnitte 3 längs der Vollschnittbahn. Vom Startloch 11 aus bewegt sich die Elektrode zu einem Startpunkt 12 und von dort aus zu einem Startloch 13 in einem Werkstück D. Auch in diesem Werkstück D vollführt die Drahtelektrode die gleichen Stempelschnitte. Sie fährt zurück zum Startloch 13 und von dort aus zu einem Startpunkt 14 für das Werkstück G. In diesem Werkstück G vollführt sie zwei weitere Stempelschnitte nach zuvor erläutertem Muster und gelangt dort von einem Startloch 15 aus zu einem Startloch 16 einer Matrize. Von diesem Startloch 16 ausgehend erodiert die Drahtelektrode zunächst eine kurze Strecke nach außen und vollführt - an der gewünschten Kontur angelangt - den ersten Matrizenvollschnitt 4. Nach Durchführung dieses Matrizenvollschnittes 4 wird die Drahtelektrode wieder zum Startloch 16 zurück, und von dort aus auf kürzestem Wege zu einem weiteren Startloch 17 bewegt. Von diesem Startloch 17 ausgehend vollführt die Drahtelektrode den gleichen Matrizenvollschnitt 4 wie schon zuvor erläutert, wobei auch hier wieder das Startloch 17 den Endpunkt der Bewegung darstellt.

Vom Startloch 17 aus wird die Drahtelektrode auf kürzestem Wege zum Startpunkt 18 in Bezug auf ein Werkstück E, bewegt. Vom Startpunkt 18 aus erfolgt die Bewegung der Drahtelektrode zu einem Startloch 19 in einem Werkstück E. Das Startloch 19 befindet sich, wie bei Matrizenschnitten üblich, innerhalb der im vorliegenden Fall elliptischen Kontur, d. h. innerhalb des Ausfallstückes. Wie schon zuvor, vollführt die Drahtelektrode einen üblichen Matrizenvollschnitt und wird schließlich wieder zum Startloch 19 zurückbewegt. Von hieraus gelangt die Drahtelektrode zu einem weiteren Startpunkt 20 für ein Werkstück F. Vom Startpunkt 20 aus wird sie zum Startloch 21 bewegt, von wo aus sie nach kurzer Einfahrstrecke die zuvor beschriebene Matrizenvollschnittbewegung durchführt, wobei wiederum das Ende der Bewegung der Drahtelektrode das Startloch 21 ist.

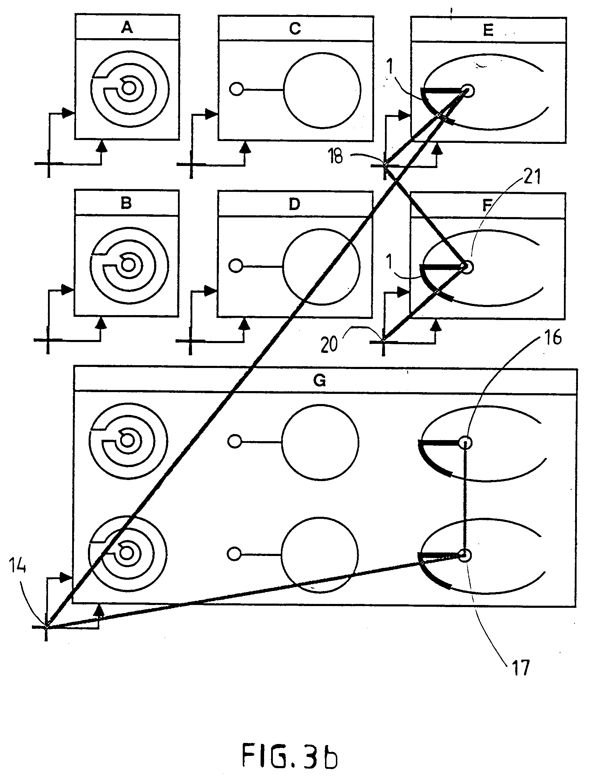

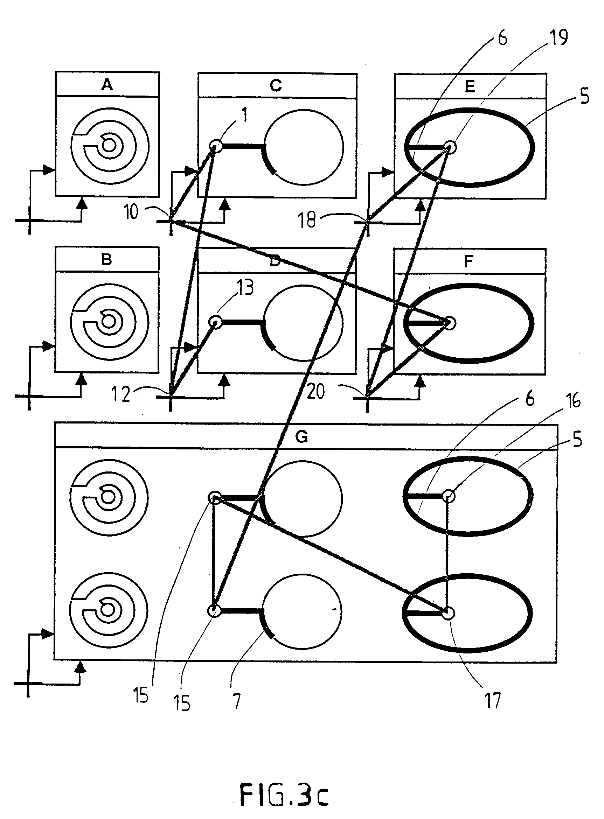

Die Schnitte in den Werkstücken C, D, E, F, und G sind nun soweit gediehen, als nun der Operateur eingreifen kann, um die erforderlichen Trennschnitte durchzuführen. Die hierfür erforderliche Schnittfolge und Aktivitäten seitens des Operateurs werden aus den Figuren 3b und 3c erkennbar.

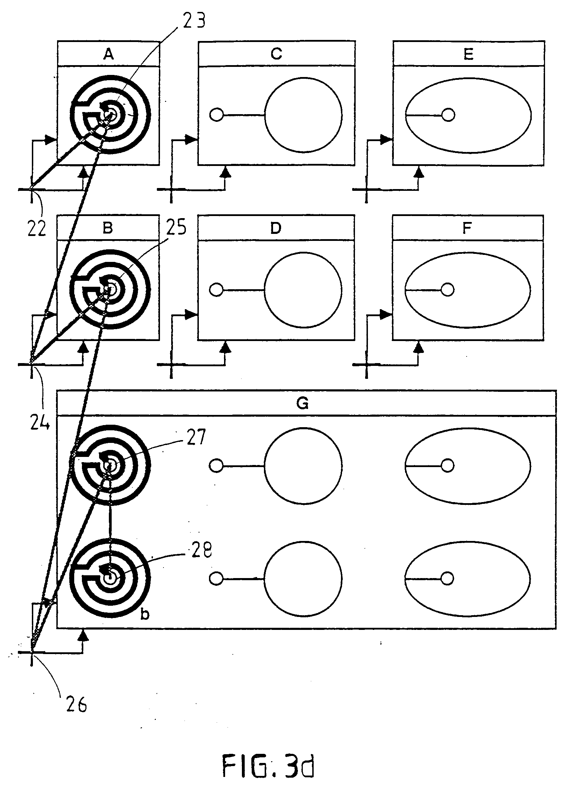

Vom Startpunkt 20 in Fig. 3d ausgehend bewegt sich zunächst wieder die Drahtelektrode aus Einstellgründen in Richtung des Startloches 21. Von diesem Startloch 21 ausgehend vollführt die Drahtelektrode eine Bewegung in Richtung nach außen, zur Kontur hin und schneidet einen Matrizentrennschnitt 1 längs der noch ungeschnittenen Konturbahn. Nach dem Matrizentrennschnitt 1 wird die Drahtelektrode zum Startloch 21 zurückbewegt und verbleibt dort solange, bis das Ausfallstück vom Operateur entnommen wurde. Eine Beschädigung der Drahterosionsmaschine kann auf diese Weise vermieden werden.

Darauffolgend wird die Drahtelektrode zum Startpunkt 18, und von dort aus zum Startloch 19 des Werkstückes E bewegt. Es erfolgt, wie zuvor beschrieben, ein weiterer Matrizentrennschnitt 1, diesmal im Werkstück E. Wieder zurückgelangt zum Startloch 19 wird die Drahtelektrode zum Startpunkt 14 für das Werkstück G bewegt. Von hier ausgehend, wird die Elektrode zunächst zum Startloch 17 bewegt, vollführt dort den Matrizentrennschnitt 1, gelangt wieder zurück zum Startloch 17, von dort aus zum Startloch 16 einer weiteren Kontur im Werkstück G und vollführt dort den letzten Matrizentrennschnitt 1. Schließlich verbleibt die Drahtelektrode am Ort des Startloches 16.

In Fig. 3c ist gezeigt, wie die Drahtelektrode nun vom Startloch 16 ausgehend zunächst die verbleibenden Nachschnitte 5 und 6 längs der Vollschnittbahn bzw. längs der Trennschnittbahn vornimmt. Die gleichen Schnitte erfolgen dann ausgehend vom Startloch 17, ebenfalls im Werkstück G. Die Drahtelektrode wird vom Startloch 17 aus zu einem der beiden Startlöcher 15 bewegt. Da bei Anwesenheit des Operateurs die Stempel innerhalb der Werkstücke C, D und G gesichert wurden, kann nun bezüglich der Stempel deren Trennschnitt 7 sowie sämtliche Stempelnachschnitte 8 längs der Trennschnittbahn erfolgen. Ist die Drahtelektrode nach diesen Stempeltrennschnitten 7 und Stempelnachschnitten 8 längs der Trennschnittbahn in dem weiteren Startloch 15 angelangt, so erfolgt ihre weitere Bewegung zum Startpunkt 18 für das Werkstück E und von dort aus zum Startloch 19 dieses Werkstückes. Vom Startloch 19 ausgehend vollführt die Drahtelektrode eine bekannte Rückwärtsbewegung hin zur Matrizenbahn und vollzieht längs dieser Matrizenbahn die gesamten Nachschnitte 5 und 6.

Wieder zurückgekehrt zum Startloch 19, wird die Drahtelektrode auf kürzestem Wege zum Startpunkt 20 geführt. Wie zuvor beim Werkstück E wird auch beim Werkstück F nach Erreichen des Startloches 21 die Drahtelektrode so geführt, daß alle noch erforderlichen Nachschnitte erfolgen.

Vom Startloch 21 aus wird die Drahtelektrode dann zum Startpunkt 10 für das Werkstück C bewegt und von dort aus zum Startloch 11. Nach einer kurzen Einfahrstrecke vollführt dann die Drahtelektrode nach der schon erfolgten Sicherung des Stempels gegenüber dem Werkstück den Stempeltrennschnitt 7 sowie sämtliche Stempelnachschnitte 8 längs der Trennschnittbahn. Nach diesen Schnitten wird die Elektrode wieder zum Startloch 11 außerhalb des Stempels geführt, von dort zum Startpunkt 12 für die Bearbeitung des Werkstückes D und von dort aus zum Startloch 13 bewegt. Von dem Startloch 13 ausgehend erfolgen nun der gleiche Stempeltrennschnitt sowie die gleichen Stempelnachschnitte 8 längs der Trennschnittbahn wie schon bei Werkstück C.

Schließlich ist noch in Fig. 3d gezeigt, wie die Werkstükke A, B sowie das Werkstück G im Vollabtrag bearbeitet werden. Hierzu sind jeweils Startpunkte 22, 24 und 26 vorgesehen, von denen aus jeweils Startlöcher 23, 25, 27 und 28 der zuvor genannten Werkstücke angefahren werden. Der Vollabtrag kann dabei, wie schon erläutert, ohne Ausfallstücksicherung erfolgen.

In den Figuren 4a bis 4d wird die Schnittfolge bei mehreren Schnittarten und mehreren Werkstücken bei spätem Trennschnitt erkennbar.

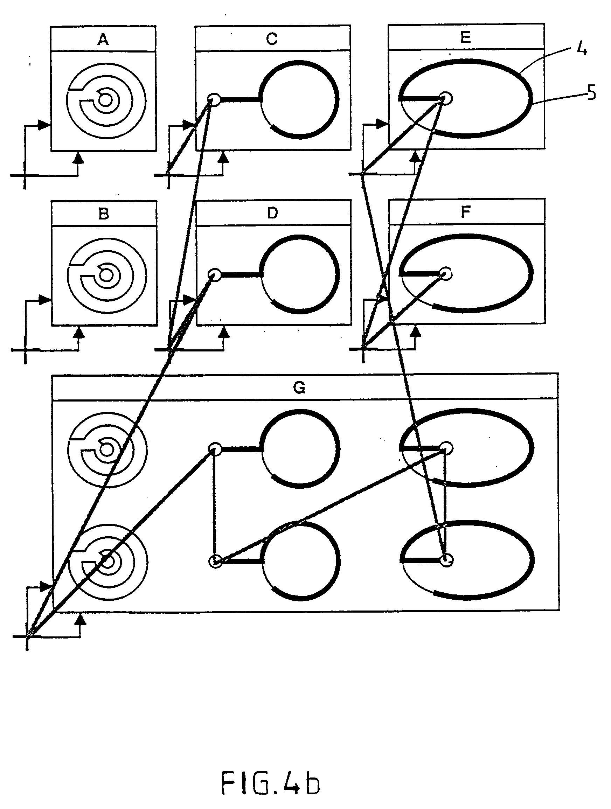

In Fig. 4a sind zunächst die zuvor erläuterten Vollabtragschnitte durchgeführt, die im folgenden nicht weiter erläutert werden. Fig. 4b entspricht der Schnittfolge der Fig. 3a. Im Unterschied zu der Schnittfolge der Fig. 3a jedoch, erfolgen in den Werkstücken E, F und G auch noch sämtliche Matrizennachschnitte 5 längs der Vollschnittbahn. Vor Anwesenheit des Operateurs sind demzufolge sämtliche Schnitte längs der Vollschnittbahn durchgeführt. Es verbleiben lediglich noch die Schnitte 7 und 8 längs der Trennschnittbahn.

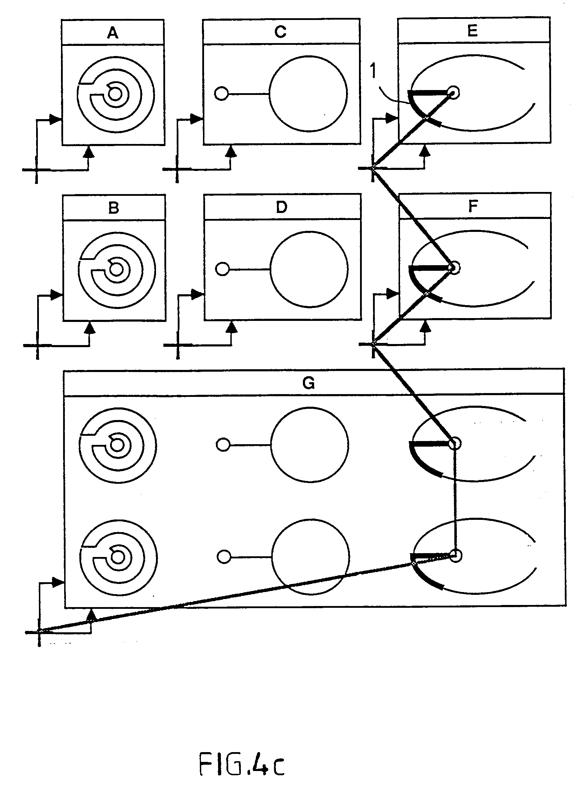

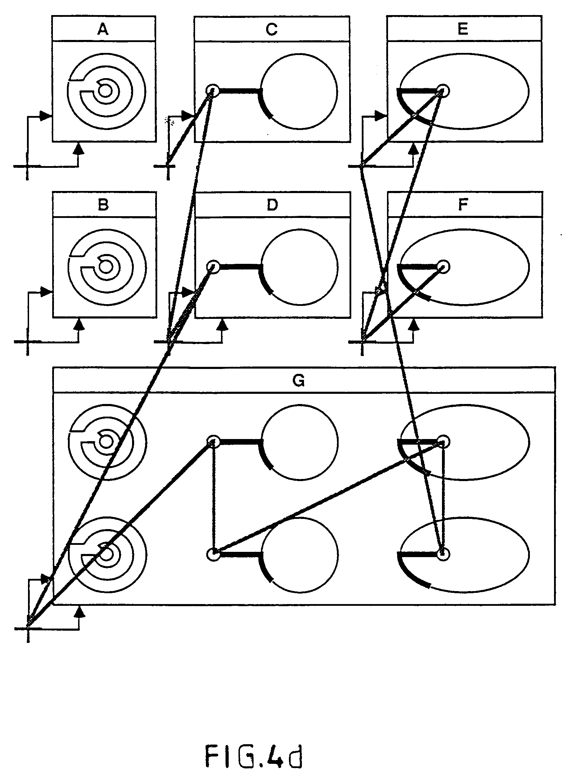

In bekannter Weise erfolgt nun die Sicherung der Stempel in den Werkstücken C, D und G. In Figur 4c, die der Fig. 3b beim frühzeitigen Trennschnitt entspricht ist dargestellt, wie bei Anwesenheit des Operateurs jeweils der Matrizentrennschnitt in den Werkstücken E, F und G vorgenommen wird. In Figur 4d schließlich sind die noch verbleibenden Schnitte entsprechend der Fig. 3c dargestellt. Im Unterschied zur Fig. 3c umfassen jedoch die Nachschnitte in den Werkstücken E, F und G gemäß Fig. 4d lediglich die Trennschnittbahn, nicht auch die Vollschnittbahn.

## Patentansprüche

1. Verfahren zum funkenerosiven Schneiden wenigstens eines Formstücks in wenigstens einem Werkstück, wobei das wenigstens eine Formstück durch einen Vollschnitt längs einer Vollschnittbahn und durch einen Trennschnitt längs einer Trennschnittbahn bearbeitet wird,
dadurch gekennzeichnet,
daß längs der Vollschnittbahn und der Trennschnittbahn Nachschnitte vorgenommen werden und der zeitliche Ablauf der Schnitte in Abhängigkeit der Arbeitsbedingungen, wobei eine Arbeitsbedingung die Anwesenheit des Operateurs ist, zu Beginn der Schneidoperation festgelegt wird und die Vollschnitte, Trennschnitte und jeweiligen Nachschnitte dementsprechend durchgeführt werden.

2. Verfahren nach Anspruch 1 zum Schneiden mehrerer Formstücke durch wenigstens einen Vollschnitt (4), einen Trennschnitt (1) sowie wenigstens jeweils einen Nachschnitt (5, 6), dadurch gekennzeichnet,
daß die Trennschnitte (1) unmittelbar nacheinander ausgeführt werden.

3. Verfahren nach Anspruch 1 oder 2, dadurch gekennzeichnet,
daß zunächst deren Vollschnitt (4), dann deren Trennschnitt (1) und daraufhin deren sämtliche Nachschnitte (5, 6) durchgeführt werden.

4. Verfahren nach Anspruch 1 oder 2, dadurch gekennzeichnet,
daß zunächst deren Vollschnitt (4), dann ein Nachschnitt (5) längs der Vollschnittbahn, dann deren Trennschnitt (1), danach ein Nachschnitt (6) längs der Trennschnittbahn und darauffolgend weitere Nachschnitte (5, 6) längs der aus Vollschnitt- und Trennschnittbahn zusammengesetzten Gesamtbahn durchgeführt werden.

5. Verfahren nach Anspruch 1 oder 2, dadurch gekennzeichnet,
daß zunächst deren Vollschnitt (4), dann sämtliche Nachschnitte (5) längs der Vollschnittbahn, dann deren Trennschnitt (1) und darauffolgend sämtliche Nachschnitte (6) längs der Trennschnittbahn durchgeführt werden.

6. Verfahren nach einem der Ansprüche 2-5, dadurch gekennzeichnet,
daß außer den Matrizen wenigstens ein Stempel geschnitten wird.

7. Verfahren nach Anspruch 6, dadurch gekennzeichnet,
daß vor dem Trennschnitt (1) der Matrize(n) ein Vollschnitt (2) und danach sämtliche Nachschnitte (3) des Stempels längs dessen Vollschnittbahn durchgeführt werden.

8. Verfahren nach Anspruch 6, dadurch gekennzeichnet,
daß nach dem Trennschnitt (1) der Matrize(n) der Trennschnitt (7) des Stempels und sämtliche Nachschnitte (8) längs dessen Trennschnittbahn durchgeführt werden.

9. Verfahren nach wenigstens einem der vorstehenden Ansprüche dadurch gekennzeichnet,
daß vor und/oder nach den Matrizen- und/oder Stempelschnitten ein Vollabtragschnitt (9) durchgeführt wird.

10. Drahterosionsmachine zum funkenerosiven Schneiden wenigstens eines Formstücks in wenigstens einem Werkstück, mit einer Steuerung, durch die die Abfolge von Vollschnitten längs einer Vollschnittbahn und von Trennschnitten längs einer Trennschnittbahn vorgebbar ist, dadurch gekennzeichnet,
daß durch die Steuerung Nachschnitte längs der Voll- und Trennschnittbahnen vorgebbar sind und die Steuerung derart ausgelegt ist, daß der Zeitraum vom Beginn der Schnitte bis zum ersten Trennschnitt berechnet und die günstigste Sequenz an Schnitten automatisch ausgewählt wird

11. Drahterosionsmaschine nach Anspruch 10, gekennzeichnet durch Mittel zur Anzeige des Zeitraumes vom Beginn der Schnitte bis zum ersten Trennschnitt.

## Claims

1. Method for cutting at least one shaped piece in at least one workpiece by electrical discharge machining, wherein the at least one shaped piece is machined by a full-width cut along a full-width cutting path and by a separating cut along a separating cutting path, characterised in that subsequent cuts are made along the full-width cutting path and the separating cutting path and the progress of the cuts in time is fixed at the beginning of the cutting operation as a function of the working conditions, wherein one working condition is the presence of the operator, and the full-width cuts, separating cuts and respective subsequent cuts are made accordingly.

2. Method according to claim 1 for cutting several shaped pieces by at least one full-width cut (4), one separating cut (1) as well as at least in each case one subsequent cut (5, 6), characterised in that the separating cuts (1) are made immediately one after the other.

3. Method according to claim 1 or 2, characterised in that first its full-width cut (4), then its separating cut (1) and thereafter all its subsequent cuts (5, 6) are made.

4. Method according to claim 1 or 2, characterised in that first its full-width cut (4), then a subsequent cut (5) along the full-width cutting path, then its separating cut (1), then a subsequent cut (6) along the separating cutting path and thereafter further subsequent cuts (5, 6) along the combined path composed of full-width and separating cutting paths are made.

5. Method according to claim 1 or 2, characterised in that first its full-width cut (4), then all subsequent cuts (5) along the full-width cutting path, then its separating cut (1) and thereafter all subsequent cuts (6) along the separating cutting path are made.

6. Method according to any of claims 2-5, characterised in that, apart from the bottom dies, at least one punch is cut.

7. Method according to claim 6, characterised in that, before the separating cut (1) of the bottom die(s), a full-width cut (2) and then all subsequent cuts (3) of the punch along its full-width cutting path are made.

8. Method according to claim 6, characterised in that, after the separating cut (1) of the bottom die(s), the separating cut (7) of the punch and all subsequent cuts (8) along its separating cutting path are made.

9. Method according to one or more of the preceding claims, characterised in that, before and/or after the bottom die and/or punch cuts, a full-width stripping cut (9) is made.

10. Wire electrical discharge machining apparatus for cutting at least one shaped piece in at least one workpiece by electrical discharge machining, with a control means by which the sequence of full-width cuts along a full-width cutting path and separating cuts along a separating cutting path can be predetermined, characterised in that subsequent cuts along the full-width and separating cutting paths can be predetermined by the control means and the control means is designed in such a way that the period of time from the beginning of the cuts to the first separating cut is calculated and the most favourable sequence of cuts is automatically selected.

11. Wire electrical discharge machining apparatus according to claim 10, characterised by means for indicating the period of time from the beginning of the cuts to the first separating cut.

## Revendications

1. Procédé de découpage par électroérosion d'au moins une pièce formée dans au moins une pièce d'oeuvre, une pièce d'oeuvre au moins étant usinée par une coupe complète le long d'une trajectoire de coupe complète et par une coupe cisaillée le long d'une trajectoire de coupe cisaillée,
caractérisé en ce qu'on procède à des coupes ultérieures le long de la trajectoire de coupe complète et de la trajectoire de coupe cisaillée et que le déroulement dans le temps des coupes est fixé au début de l'opération de découpage en fonction des conditions de travail, une condition de travail étant la présence de l'opérateur, et les coupes complètes, les coupes cisaillées et les coupes ultérieures respectives étant effectuées en conséquence.

2. Procédé selon la revendicatiion 1 pour couper plusieurs pièces formées par au moins une coupe complète (4), une coupe cisaillée (1) et au moins respectivement une coupe ultérieure (5, 6), caractérisé en ce que les coupes cisaillées (1) sont exécutées immédiatement les unes après les autres.

3. Procédé selon la revendication 1 ou 2, caractérisé en ce qu'on effectue d'abord leur coupe complète (4), puis leur coupe cisaillée (1) et ensuite l'ensemble des coupes ultérieures (5, 6),

4. Procédé selon la revendication 1 ou 2, caractérisé en ce qu'on effectue d'abord leur coupe complète (4), puis une coupe ultérieure (5) le long de la trajectoire de coupe complète, ensuite leur coupe cisaillée (1), puis une coupe ultérieure (6) le long de la trajectoire de coupe cisaillée et ensuite d'autres coupes ultérieures (5, 6) le long de l'ensemble de la trajectoire comprenant la trajectoire de coupe complète et la trajectoire cisaillée.

5. Procédé selon la revendication 1 ou 2, caractérisé en ce qu'on effectue d'abord leur coupe complète (4), puis l'ensemble des coupes ultérieures (5) le long de la trajectoire de coupe complète, puis leur coupe cisaillée (1) et ensuite l'ensemble des coupes ultérieures (6) le long de la trajectoire de coupe cisaillée.

6. Procédé selon l'une quelconque des revendications 2 à 5, caractérisé en ce qu'on coupe au moins un poinçon en dehors des matrices.

7. Procédé selon la revendication 6, caractérisé en ce que, avant la coupe cisaillée (1) de la matrice / des matrices, on effectue une coupe complète (2) et après l'ensemble des coupes ultérieures (3) du poinçon le long de sa trajectoire de coupe complète.

8. Procédé selon la revendication 6, caractérisé en ce que, après la coupe cisaillée (1) de la matrice / des matrices, on effectue une coupe cisaillée (7) du poinçon et l'ensemble des coupes ultérieures (8) le long de sa trajectoire de coupe cisaillée.

9. Procédé selon au moins l'une des revendications précédentes, caractérisé en ce que, avant et/ou après les coupes de matrice et/ou de poinçon, on effectue une coupe complète avec enlèvement (9).

10. Procédé de découpage par électroérosion d'au moins une pièce formée dans au moins une pièce d'oeuvre, avec une commande par laquelle on peut prédéfinir la séquence de coupes complètes le long d'une trajectoire de coupe complète et de coupes cisaillées le long d'une trajectoire de coupe cisaillée,
caractérisé en ce que, par la commande, on peut prédéfinir les coupes ultérieures le long des trajectoires de couple pleine et de coupe cisaillée et en ce que la commande est conçue de telle façon que le laps de temps s écoulant du début des coupes jusqu'à la première coupe cisaillée soit calculé et que la séquence de coupes la plus avantageuse soit sélectionnée automatiquement.

11. Machine à découper par fil selon la revendication 10, caractérisée par des moyens pour afficher le laps de temps s'écoulant depuis le début des coupes jusqu'à la première coupe cisaillée.
